# EUROPEAN PATENT SPECIFICATION

(11) **EP 0 770 520 B1**
(45) Date of publication and mention of the grant of the patent: **17.10.2001**
(21) Application number: 96305135.4
(22) Date of filing: 12.07.1996
(51) Int. Cl.: B60R 1/06

(54) **Reversible exterior rearview mirror**
Umkehrbarer Aussenrückspiegel
Rétroviseur extérieur polyvalent

(30) Priority: 27.10.1995 BR 9504888
(43) Date of publication of application: 02.05.1997
(73) Proprietor: METAGAL INDUSTRIA E COMERCIO LTDA., Diadema - Estado de Sao Paulo (BR)
(72) Inventor: Gordon, Paulo Alexandre, Sao Paulo - Estado de Sao Paulo (BR)
(74) Representative: Murgatroyd, Susan Elizabeth

(56) References cited:
- DE-A- 2 726 310
- DE-B- 2 460 854
- DE-U- 7 913 087
- DE-U- 8 003 515
- FR-A- 2 477 081
- US-A- 4 394 066
- US-A- 5 268 797
- US-A- 5 337 188

## Description

This invention relates to outside rearview mirrors, in particular for use as a motor vehicle accessory.

Outside rearview mirrors of the reversible type are already known in the art, namely, those which may be used indistinctly on the left or on the right side of the vehicle. These mirrors basically comprise a mirror plate; a housing which contains the mirror plate, both the housing and mirror plate being symmetrical about a horizontal axis; a rigid rod to which the housing is attached by bolts and clamps; and a base to which the rigid rod is affixed in a pivot joint and which is connected to the vehicle body.

The rigid rod is normally made of thermoplastic material, and between the rod and the housing there is at least one clamp which locks the mirror and housing assembly in a given rotary position and one or more bolts which assure the fastening of the assembly.

Even considering the wide use and high efficiency of the outside rearview mirrors which have the above mentioned construction, there are some inconveniences which may be attributed to them, such as the high complexity of the fastening means used between the housing and the rigid rod, which creates undesirable difficulties at the factory assembly line.

Another problem is related to a certain degree of difficulty for the user when performing the reversal of the mirror which is also an undesirable fact.

US-A-5337188 discloses one type of known fastening means comprising two L-shaped clamps which protrude perpendicularly from a side of the rod which receives the housing and a groove formed in a side of the housing for receiving the clamps. The longer legs of the L-shaped clamps, which protrude from the side of the housing, pass through the groove and remain pressed against the edges of the groove and the shorter legs of the clamps remain pressed against internal surface regions of the housing.

It is therefore an object of the present invention to provide an improved reversible rearview mirror which aims to eliminate the aforesaid problems.

Accordingly, the present invention consists in a reversible rearview mirror comprising a mirror plate; a housing which houses the mirror plate, both the mirror and the housing being symmetrical with respect to a horizontal geometric axis; a rod for supporting the housing; fixing means located between the housing and the rod; and a base in which the supporting rod is pivoted and which is intended to be fixed to a vehicle body; the fixing means comprising at least two L-shaped clamps which protrude perpendicularly from a side of the supporting rod which receives the housing, and groove means formed in a side of the housing for receiving the L-shaped clamps, whereby during interconnection of the housing and rod, the longer legs of said "L" shaped clamps, which protrude from the side of the supporting rod, pass through the groove means and remain pressed against the edges of said groove means and the shorter legs of said "L" shaped clamps remain pressed against internal surface regions of the housing adjacent to the groove means, such that the side of the housing is pressed against the side of the rod; characterized in that
said supporting rod is semi-rigid, in such a way that it bends when its ends are pressed towards each other in a direction substantially axial to the rod ;
said L-shaped clamps are arranged along a direction substantially axial to the rod with the shorter legs of the L-shaped clamps oriented outwards towards respective ends of the rod; and
the groove means comprise a respective groove for receiving each L-shaped clamp and the grooves are arranged in a longitudinal alignment in said side of the housing so that when the housing and rod are interconnected the L-shaped clamps press against outer ends of said grooves.

The invention will now be described by way of example with reference to the accompanying drawings, in which:-
Figure 1 is an exploded view of one embodiment of the invention;
Figure 2 shows the assembled embodiment, in a view along the plane which passes between the housing and the supporting rod, with partial sections for a better understanding, and assembled for left side use;
Figure 3 shows the same view as Figure 2, but with detailed indication on how the assembly or disassembly of the housing and rod is made; and
Figure 4 shows the mirror assembled for right side use.

Referring now to the Figures, a reversible outside rearview mirror comprises a mirror plate 1, a housing 2 which houses the mirror plate, both the mirror 1 and the housing 2 being symmetrical with respect to a horizontal geometric axis "X"; a rod 3 for supporting the housing 2; assembling or fixing means 4,5 located between the housing 2 and the rod 3; and a base 6 in which the supporting rod 3 is pivoted and which is fixed to the vehicle body 7; the housing 2, the supporting rod 3 and the base 6 being made of an appropriate thermoplastic material.

In the present improvement, the supporting rod 3 is semi-rigid, in such a way that it bends when its ends are pressed towards each other, in a direction substantially axial to the rod; and the fixing means 4,5 between the housing 2 and the supporting rod 3 comprise at least two "L" shaped clamps 4 which protrude perpendicularly from the respective outside portion of side 10 of the supporting rod 3 which receives the housing 2. The clamps 4 are arranged in longitudinal alignment on the side 10 and with the free ends turned outwards in opposite directions and substantially parallel to the corresponding ends closest to the supporting rod 3. The fixing means 4,5 also comprise respective grooves 5, made in side 11 of the housing 2 adjacent to the side 10 of the supporting rod 3, which are arranged in a longitudinal alignment on the side of the housing and receive the "L" shaped clamps 4. During interconnection of the housing 2 and rod 3, longer legs 12 of the "L" shaped clamps 4, which protrude from the side 10 of the supporting rod 3, pass through the respective grooves 5 and remain pressed against the transversal edges of the grooves, and shorter legs 13 of the "L" shaped clamps 4 remain pressed against the internal surface regions of the housing 2, adjacent to the ends of the grooves 5, thereby pressing the side 11 of the housing 2 against the side 10 of the supporting rod 3, so as to secure the whole assembly together.

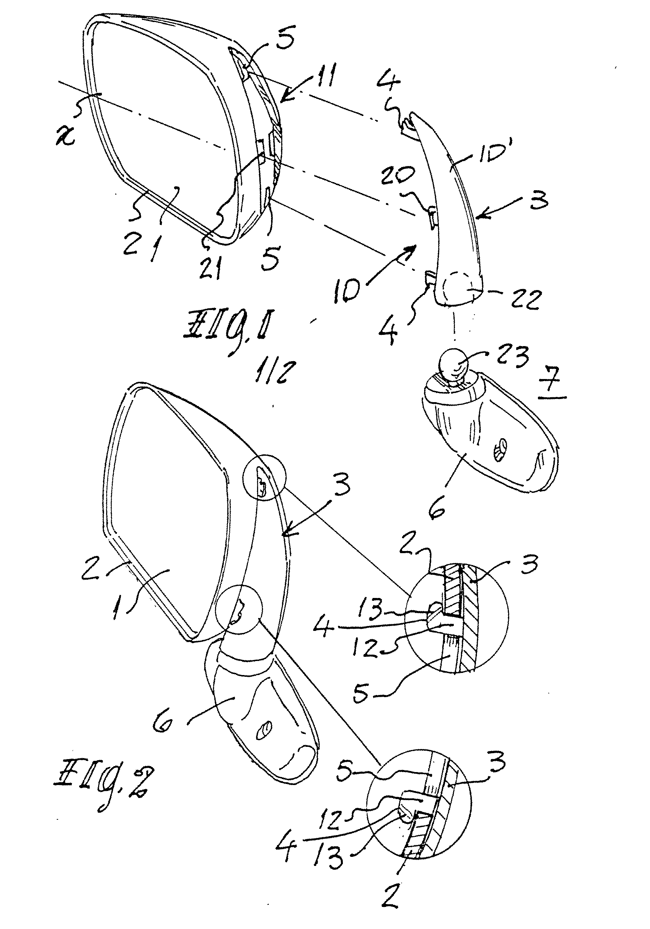

In this way, when the rearview mirror is assembled (Fig. 2), the "L" shaped clamps 4 of the supporting rod 3 remain connected to the respective grooves 5 of the housing 2, such that the edges of the longer legs 12 of the clamps remain pressed against the outside transversal edges of the grooves 5 and the edges of the shorter legs 13 of the clamps remain pressed against the internal surface of the housing 2, pressing the sides 10 and 11 of the supporting rod 3 and the housing 2 against each other.

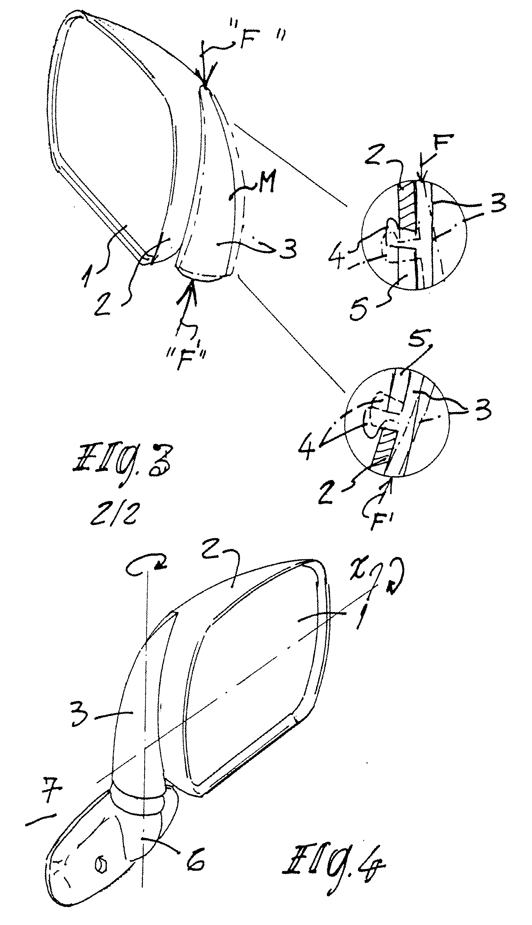

When the mirror is to be disassembled to have its position changed, as an example, from the right side (Fig. 2) to the left side (Fig. 4), the ends of the supporting rod 3 are pressed towards each other (Fig. 3). In this way, the opposite forces, F and F' will force the rod to bend in its middle region "M", and the "L" shaped clamps 4 will take a new position in which they may be disconnected from the respective grooves 5, therefore allowing the supporting rod 3 to be disassembled from the housing 2.

Then, the assembly of the housing 2 and mirror 1 is turned about the horizontal axis "X" and the vertical axis by 180°, and the supporting rod 3 is again pressed with the "L" shaped clamps 4 becoming connected to the inverted grooves 5, namely, one "L" shaped clamp 4 enters into the groove 5 which had been previously connected to the other "L" shaped clamp 4. The supporting rod 3 is then released, so that the "L" shaped clamps 4 are again pressed against the outside transversal edges of the grooves 5 and the inner surface of the housing, due to the elasticity of the material used for making the supporting rod 3, therefore fixing the assembly in its new position.

In a preferred configuration, as shown in the figures, the supporting rod 3 presents a curved shape, in order to facilitate its bending when pressed from its ends. The supporting rod 3 is semirigid and is formed from a plate with its profile being substantially elliptic, with its concave side 10 turned towards the convex housing 2 and having a convex outer surface 10'. The side 10 has in its ends the "L" shaped clamps 4 and, in an intermediate region, the surface has two other auxiliary "L" shaped clamps 20 located in a crossed transversal alignment with respect to the longitudinal alignment of the clamps 4. The auxiliary clamps 20 connect themselves to the respective grooves 21 made in the side 11 of the housing 2. The lower end of the rod 3 also provides a seat 22, which connects with ball joint 23 provided in the base 6.

The housing 2 has a slightly, recessed side 11 where the grooves 5 and 21 are provided, with a profile substantially equal to that of the supporting rod 3 and ready to receive the rod, in such a way that the outside surface of the supporting rod 3 is continuously in contact with the outside surface of the housing 2.

Within the above described basic conception, the reversible outside rearview mirror may be changed with respect to materials, configurations, dimensions, colors, finishing and others, without departing from the scope of the appended claims.

## Claims

1. Reversible rearview mirror comprising a mirror plate (1); a housing (2) which houses the mirror plate, both the mirror (1) and the housing (2) being symmetrical with respect to a horizontal geometric axis "X"; a rod (3) for supporting the housing (2); fixing means (4,5) located between the housing (2) and the rod (3); and a base (6) in which the supporting rod (3) is pivoted and which is intended to be fixed to a vehicle body (7); the fixing means (4,5) comprising at least two L-shaped clamps (4) which protrude perpendicularly from a side (10) of the supporting rod (3) which receives the housing (2), and groove means (5) formed in a side (11) of the housing (2) for receiving the L-shaped clamps (4), whereby during interconnection of the housing (2) and rod (3), the longer legs (12) of said "L" shaped clamps (4), which protrude from the side (10) of the supporting rod (3), pass through the groove means (5) and remain pressed against the edges of said groove means (5) and the shorter legs (13) of said "L" shaped clamps (4) remain pressed against internal surface regions of the housing (2) adjacent to the groove means (5), such that the side (11) of the housing (2) is pressed against the side (10) of the rod (3); **characterized in that**
said supporting rod (3) is semi-rigid, in such a way that it bends when its ends are pressed towards each other in a direction substantially axial to the rod (3);
said L-shaped clamps (4) are arranged along a direction substantially axial to the rod (3) with the shorter legs (13) of the L-shaped clamps (4) oriented outwards towards respective ends of the rod (3); and
the groove means (5) comprise a respective groove (5) for receiving each L-shaped clamp (4) and the grooves (5) are arranged in a longitudinal alignment in said side (11) of the housing (2) so that when the housing (2) and rod (3) are interconnected the L-shaped clamps (4) press against outer ends of said grooves (5).

2. Reversible rearview mirror as claimed in claim 1, wherein the rod (3) presents a curved shape, in order to facilitate its bending when pressed from its ends, said rod (3) being formed from a plate with its profile being substantially elliptic and the side (10) which receives the housing (2) being concave.

3. Reversible rearview mirror as claimed in claim 1 or 2, wherein the side (10) of the rod (3) has adjacent its ends the "L" shaped clamps (4) and in an intermediate region two auxiliary "L" shaped clamps (20) located in a crossed transversal alignment with respect to the longitudinal alignment of said clamps (4), and the side (11) of the housing (2) has respective grooves (21) in which the auxiliary clamps (2) connect.

4. Reversible rearview mirror as claimed in claim 1, 2 or 3, wherein the lower end of said rod (3) provides a seat (22) which connects with a ball joint (23) provided on said base (6).

5. Reversible rearview mirror as claimed in any preceding claim, wherein the side (11) of the housing (2) is formed with a recess in which the grooves (5,21) are provided and which has a profile substantially equal to that of the rod (3) such that when said rod (3) is received by said recess the outer surface of the rod (3) is continuously in contact with the outer surface of said housing (2).

## Patentansprüche

1. Umdrehbarer Außenrückspiegel, der eine Spiegelscheibe (1), ein Gehäuse (2), das die Spiegelscheibe aufnimmt, wobei sowohl der Spiegel (1) als auch das Gehäuse (2) in Bezug auf eine geometrische horizontale x-Achse symmetrisch sind, einen Stab (3) für die Halterung des Gehäuses (2), zwischen Gehäuse (2) und Stab (3) befindliche Befestigungsmittel (4, 5) und einen Fuß (6), in welchem der Halterungsstab (3) schwenkbar und welcher vorgesehen ist, an einer Fahrzeugkarosserie (7) befestigt zu werden, umfasst, wobei die Befestigungsmittel (4, 5) mindestens zwei L-förmige Klemmen (4), die von einer Seite (10) des das Gehäuse (2) aufnehmenden Halterungsstabs (3) senkrecht vorstehen, und Schlitze (5), die in einer Seite (11) des Gehäuses (2) für die Aufnahme der L-förmigen Klemmen (4) ausgebildet sind, umfassen, wodurch bei der Verbindung des Gehäuses (2) mit dem Stab (3) die langen Schenkel (12) dieser L-förmigen Klemmen (4), welche von der Seite (10) des Halterungsstabs (3) vorstehen, durch die Schlitze (5) hindurchgehen und an die Kanten dieser Schlitze (5) gepresst bleiben und die kurzen Schenkel (13) dieser L-förmigen Klemmen (4) an die an die Schlitze (5) angrenzenden Bereiche der Innenfläche des Gehäuses (2) derart gepresst bleiben, dass die Seite (11) des Gehäuses (2) an die Seite (10) des Stabes (3) gepresst wird,
**dadurch gekennzeichnet, dass** der Halterungsstab (3) derart halb starr ist, dass er sich biegt, wenn seine Enden in einer zu diesem Stab (3) im Wesentlichen axialen Richtung zueinander gedrückt werden, die L-förmigen Klemmen (4) in einer zu diesem Stab (3) im Wesentlichen axialen Richtung angeordnet sind, wobei die kurzen Schenkel (13) der L-förmigen Klemmen (4) zum jeweiligen Ende des Stabes (3) nach außen zeigen, und die Schlitze (5) jeweils einen Schlitz (5) für die Aufnahme der entsprechenden L-förmigen Klemme (4) enthalten und in einer Längsausrichtung in der Seite (11) des Gehäuses (2) derart angeordnet sind, dass, wenn das Gehäuse (2) und der Stab (3) miteinander verbunden sind, die L-förmigen Klemmen (4) an die äußeren Enden der Schlitze (5) pressen.

2. Umdrehbarer Außenrückspiegel nach Anspruch 1, wobei der Stab (3) eine gekrümmte Form aufweist, um den Biegevorgang zu erleichtern, wenn auf seine Enden gedrückt wird, dieser Stab (3) aus einer Platte geformt worden ist und sein Profil im Wesentlichen elliptisch und die das Gehäuse (2) aufnehmende Seite (10) konkav ist.

3. Umdrehbarer Außenrückspiegel nach Anspruch 1 oder 2, wobei die Seite (10) des Stabs (3) an den Enden die L-förmigen Klemmen (4) und in einem mittleren Teil zwei L-förmige Hilfsklemmen (20), die sich in einer Ausrichtung befinden, die in Bezug auf die Längsausrichtung jener Klemmen (4) quer gekreuzt ist, und die Seite (11) des Gehäuses (2) entsprechende Schlitze (21), in welche die Hilfsklemmen (2) eingreifen, besitzt.

4. Umdrehbarer Außenrückspiegel nach Anspruch 1, 2 oder 3, wobei das untere Ende des Stabs (3) eine Aufnahme (22) bietet, in welche ein am Fuß (6) vorgesehenes Kugelgelenk (23) eingreift.

5. Umdrehbarer Außenrückspiegel nach einem der vorhergehenden Ansprüche, wobei die Seite (11) des Gehäuses (2) mit einer Vertiefung geformt ist, in welcher die Schlitze (5, 21) vorgesehen sind und welche ein Profil besitzt, das im Wesentlichen gleich demjenigen des Stabs (3) derart ist, dass, wenn dieser Stab (3) von dieser Vertiefung aufgenommen ist, die Außenfläche des Stabs (3) sich in ununterbrochener Berührung mit der Außenfläche des Gehäuses (2) befindet.

## Revendications

1. Rétroviseur réversible comprenant une glace miroir (1) ; un boîtier (2) qui abrite la glace miroir, le miroir (1) et le boîtier (2) étant symétriques par rapport à un axe géométrique horizontal "X" ; une tige (3) destinée à supporter le boîtier (2) ; des moyens de fixation (4, 5) situés entre le boîtier (2) et la tige (3) ; et une base (6) dans laquelle la tige de support (3) pivote et qui est destinée à être fixée à une carrosserie de véhicule (7) ; les moyens de fixation (4, 5) comprenant au moins deux crochets en forme de L (4) qui font saillie perpendiculairement à partir d'un côté (10) de la tige de support (3) qui reçoit le boîtier (2), et des moyens formant rainures (5) formés dans un côté (11) du boîtier (2) et destinés à recevoir les crochets en forme de L (4), de telle manière que lors de l'interconnexion du boîtier (2) et de la tige (3), les pattes longues (12) desdits crochets en forme de L (4), qui font saillie à partir du côté (10) de la tige de support (3), passent à travers les moyens formant rainures (5) et restent appuyées contre les bords desdits moyens formant rainures (5), et que les pattes courtes (13) desdits crochets en forme de L (4) restent appuyées contre les zones de surface intérieures du boîtier (2) adjacentes aux moyens formant rainures (5), de sorte que le côté (11) du boîtier (2) est pressé contre le côté (10) de la tige (3) ; **caractérisé en ce que**
ladite tige de support (3) est semi-rigide, de telle manière qu'elle fléchit quand ses extrémités sont pressées l'une vers l'autre dans une direction sensiblement axiale par rapport à la tige (3) ;
lesdits crochets en forme de L (4) sont agencés dans une direction sensiblement axiale par rapport à la tige (3), les pattes courtes (13) des crochets en forme de L (4) étant orientées vers l'extérieur vers les extrémités respectives de la tige (3) ; et
les moyens formant rainures (5) comprennent en différents points une rainure respective (5) destinée à recevoir chaque crochet en forme de L (4), et les rainures (5) sont agencées en un alignement longitudinal dans ledit côté (11) du boîtier (2) de telle manière que quand le boîtier (2) et la tige (3) sont interconnectés, les crochets en forme de L (4) s'appuient contre des extrémités extérieures desdites rainures (5).

2. Rétroviseur réversible selon la revendication 1, dans lequel la tige (3) présente une forme incurvée afin de faciliter sa flexion quand elle est pressée par ses extrémités, ladite tige (3) étant formée à partir d'une plaque, son profil étant sensiblement elliptique et le côté (10) qui reçoit le boîtier (2) étant concave.

3. Rétroviseur réversible selon la revendication 1 ou 2, dans lequel le côté (10) de la tige (3) présente les crochets en forme de "L" (4) près de ses extrémités et comporte, dans une zone intermédiaire, deux crochets auxiliaires en forme de "L" (20) placés en un alignement transversal croisé par rapport à l'alignement longitudinal desdits crochets (4), et le côté (11) du boîtier (2) a des rainures respectives (21) dans lesquelles les crochets auxiliaires (2) s'emboîtent.

4. Rétroviseur réversible selon la revendication 1, 2 ou 3, dans lequel l'extrémité inférieure de ladite tige (3) forme un siège (22) qui s'emboîte sur un joint à rotule (23) situé sur ladite base (6).

5. Rétroviseur réversible selon une quelconque revendication précédente, dans lequel le côté (11) du boîtier (2) est pourvu d'un évidement dans lequel les rainures (5, 21) sont ménagées et qui a un profil sensiblement identique à celui de la tige (3) de telle manière que quand ladite tige (3) est reçue dans ledit évidement, la surface extérieure de la tige (3) est constamment en contact avec la surface extérieure dudit boîtier (2).
